# EUROPÄISCHE PATENTSCHRIFT

(11) **EP 3 989 122 B1**
(45) Veröffentlichungstag und Bekanntmachung des Hinweises auf die Patenterteilung: **03.12.2025**
(21) Anmeldenummer: 21203650.3
(22) Anmeldetag: 20.10.2021
(51) Int. Cl.: G06K 19/10, G07D 7/004, G07D 7/01, G06F 21/34, G06F 21/64, H04L 9/08, H04L 9/32

(54) **VERFAHREN ZUM PERSONALISIEREN EINES ID-DOKUMENTS, PERSONALISIERTES ID-DOKUMENT SOWIE VERFAHREN ZUM AUTHENTIFIZIEREN EINES PERSONALISIERTEN ID-DOKUMENTS**
METHOD FOR PERSONALIZING AN ID DOCUMENT, PERSONALIZED ID DOCUMENT AND METHOD FOR AUTHENTICATING A PERSONALIZED ID DOCUMENT
PROCÉDÉ DE PERSONNALISATION D'UNE PIÈCE D'IDENTITÉ, PIÈCE D'IDENTITÉ PERSONNALISÉE, AINSI QUE PROCÉDÉ D'AUTHENTIFICATION D'UNE PIÈCE D'IDENTITÉ PERSONNALISÉE

(30) Priorität: 22.10.2020 DE 102020127853
(43) Veröffentlichungstag der Anmeldung: 27.04.2022
(73) Patentinhaber: Bundesdruckerei GmbH, 10969 Berlin (DE)
(72) Erfinder: Byszio-Wegener, Frank, 16348 Wandlitz (DE); Wirth, Dr. Klaus-Dieter, 12683 Berlin (DE); Nguyen, Dr. Kim, 10437 Berlin (DE)
(74) Vertreter: Bittner, Thomas L.

(56) Entgegenhaltungen:
- EP-A2- 1 686 541
- WO-A1-2016/179334
- DE-A1- 102015 211 615
- DE-A1- 102018 115 350

## Beschreibung

Die Erfindung betrifft ein Verfahren zum Personalisieren eines ID-Dokuments sowie ein personalisiertes ID-Dokument und ein Verfahren zum Authentifizieren eines personalisierten ID-Dokuments.

### Hintergrund

Personalisierte ID-Dokumente, also ein Dokument, welches zum Nachweis der Identität einer Person auswertbar ist, verfügen regelmäßig über einen Dokumentenkörper und auf dem Dokumentenkörper angeordnete personalisierte Daten, die Informationen betreffend die Person anzeigen oder angeben. Es sind ID-Dokumente bekannt, bei denen in den Dokumentenkörper ein elektronischer Chip eingebettet ist, beispielsweise in Form einer Plastikarte mit elektronischem Chip. Dieses ermöglicht es, personalisierte Daten ergänzend oder ausschließlich als elektronische Daten in dem elektronischen Chip zu hinterlegen, was mittels elektronischer Datenspeicherung erfolgt. Die personalisierten Daten stehen dann zum Beispiel zur Personenidentifizierung zur Verfügung, derart, dass die gespeicherten personalisierten Daten mittels eines geeigneten Lesegeräts aus dem elektronischen Chip ausgelesen und ausgewertet werden können.

In einer Ausgestaltung kann es sich bei dem ID-Dokument um ein maschinenlesbares Reisedokument handeln. Zur Standardisierung derartiger ID-Dokumente hat die internationale Behörde für die Zivilluftfahrt (ICAO - *International Civil Aviation Organisation*) zum Beispiel den Standard ICAO Doc 9303 beschlossen. Danach ist unter anderem eine passive Authentifizierung des maschinenlesbaren Reisedokuments vorgesehen. Die passive Authentifizierung dient der Prüfung der Integrität personalisierter Daten auf dem ID-Dokument. Für Datengruppen oder -objekte wird mittels einer Hashfunktion jeweils ein Hashwert bestimmt. Ein sogenanntes Dokument-Sicherheits-Objekt (SOD - *Document Security Object*) fasst die Hashwerte zusammen. Das SOD wird im elektronischen Chip des ID-Dokuments gespeichert. Weiterhin wird eine digitale Signatur fürs SOD bestimmt und ebenfalls in dem elektronischen Chip abgelegt. Die für eine Prüfung der Integrität der Datengruppen oder -objekte genutzten Informationen werden so zusammen in dem elektronischen Chip gespeichert.

Gemäß dem Dokument DE 10 2015 220 244 A1 ist ein Verfahren zur Überprüfung eines Dokumentes, insbesondere eines Wert- oder Sicherheitsdokuments vorgesehen, wobei auf dem Dokument personen- und / oder dokumentenspezifische Daten in maschinenlesbarer Form gespeichert sind, und wobei auf dem Dokument ein Zufallswert in maschinenlesbarer Form gespeichert ist. Das Dokument kann mit einem Speicher bzw. Chip gebildet sein, in dem eine Signatur abgelegt wird.

In dem Dokument DE 102 96 626 T5 ist ein Verfahren zum elektronischen und / oder digitalen Signieren von Daten unter Verwendung einer ein elektronisches Signatursystem verwendenden ersten Signatureinrichtung beschrieben. In dem Dokument US 2019 / 205413 A1 sind Methoden offenbart, eine Doppelung von Dateien in einem Cloudspeicher zu vermeiden. Das Dokument DE 10 2006 049 442 A1 betrifft ein Verfahren zum Freischalten einer ersten Chipkarte zur Verwendung mit einem Datenverarbeitungssystem mit Hilfe einer zweiten Chipkarte.

Das Dokument DE 10 2018 115 350 betrifft ein Verfahren zum manipulationssicheren Ausstellen und Speichern einer Mehrzahl von elektronischen Urkunden unter Verwendung einer Blockchain. Das Verfahren umfasst: Empfangen eines Datensatzes zum Eintragen durch einen Blockchain-Server eines Blockchain-Netzwerks, wobei der Datensatz Daten einer auszustellenden elektronischen Urkunde entsprechend einer Spezifikation einer hoheitlichen Institution umfasst, Ausführen von Programminstruktionen eines Programmmoduls der Blockchain, wobei das Programmmodul zum Ausstellen von elektronischen Urkunde entsprechend der Spezifikation konfiguriert ist, wobei das Ausführen der Programminstruktionen ein Prüfen des Datensatzes umfasst, ob der Datensatz die Spezifikation erfüllt, falls der Datensatz die Spezifikation erfüllt, ein Hinzufügen des Datensatzes zu einem zusätzlichen Block der Blockchain.

### Zusammenfassung

Aufgabe der Erfindung ist es, ein Verfahren zum Personalisieren eines ID-Dokuments sowie ein personalisiertes ID-Dokument anzugeben, mit denen die Anwendungsmöglichkeiten für personalisierte ID-Dokumente erweitert werden und eine erhöhte Sicherheit ermöglicht wird. Auch soll ein Verfahren zum Authentifizieren eines solchen personalisierten ID-Dokuments geschaffen werden.

Zur Lösung sind ein Verfahren zum Personalisieren eines ID-Dokuments sowie ein System nach den unabhängigen Ansprüchen 1 und 12 geschaffen. Weiterhin ist ein Verfahren zum Authentifizieren eines personalisierten ID-Dokuments nach dem nebengeordneten Anspruch 13 geschaffen. Ausgestaltungen sind Gegenstand von abhängigen Unteransprüchen.

Nach einem Aspekt ist ein Verfahren zum Personalisieren eines ID-Dokuments geschaffen, bei dem ein ID-Dokument mit einem in einen Dokumentenkörper eingebetteten elektronischen Chip bereitgestellt wird. Vor und / oder nach dem Einbetten des elektronischen Chips in den Dokumentenkörper ist beim Personalisieren des ID-Dokuments Folgendes vorgesehen: Speichern von personalisierten Daten in dem elektronischen Chip; Berechnen einer ersten digitalen Signatur für die personalisierten Daten unter Verwendung eines ersten Signaturverfahrens; Speichern der ersten digitalen Signatur für die personalisierten Daten zumindest teilweise außerhalb des elektronischen Chips in einem Computernetzwerk, derart, dass die erste digitale Signatur unter Verwendung von erster Netzwerk-Abrufinformation zumindest teilweise in dem Computernetzwerk abrufbar ist; und Speichern von ersten Abrufdaten, die die erste Netzwerk-Abrufinformation anzeigen, auf dem Dokumentenkörper und / oder in dem elektronischen Chip.

Nach einem weiteren Aspekt ist ein System mit einem personalisierten ID-Dokument geschaffen, welches Folgendes aufweist: einen Dokumentenkörper; einen elektronischen Chip, der in den Dokumentenkörper eingebettet ist; personalisierte Daten, die in dem elektronischen Chip gespeichert sind; und erste Abrufdaten, die auf dem Dokumentenkörper und / oder in dem elektronischen Chip gespeichert sind und erste Netzwerk-Abrufinformation anzeigen oder angeben, welche nutzbar ist, eine erste digitale Signatur, die für die personalisierten Daten mit Hilfe eines ersten Signaturverfahrens berechnet wurden, zumindest teilweise von außerhalb des elektronischen Chips aus einem Computernetzwerk des Systems abzurufen.

Nach einem anderen Aspekt ist ein Verfahren zum Authentifizieren eines personalisierten ID-Dokuments geschaffen, welches einen Dokumentenkörper und einen hierin eingebetteten elektronischen Chip aufweist. Bei dem Verfahren ist Folgendes vorgesehen: Auslesen von ersten Abrufdaten, die auf dem Dokumentenkörper und / oder in dem elektronischen Chip gespeichert sind und erste Netzwerk-Abrufinformation anzeigen, die nutzbar ist, um eine erste digitale Signatur in einem Computernetzwerk abzurufen, welches außerhalb des elektronischen Chips gebildet ist, wobei die erste digitale Signatur eine digitale Signatur für auf dem elektronischen Chip beim Personalisieren des ID-Dokuments gespeicherte personalisierte Daten ist; Abrufen der ersten elektronischen Signatur zumindest teilweise aus dem Computernetzwerk unter Verwendung der ersten Netzwerk-Abrufinformation und Prüfen der Integrität der auf dem elektronischen Chip gespeicherten personalisierten Daten unter Verwendung der ersten digitalen Signatur.

Die Reihenfolge der vorgesehenen Schritte kann in unterschiedlichen Ausgestaltungen der vorgenannten Aspekte verschiedenen sein.

Es ist vorgesehen, in Verbindung mit dem personalisierten ID-Dokument die erste elektronische Signatur, die für die auf dem elektronischen Chip zum Personalisieren gespeicherten personalisierten Daten oder einen Teil hiervon berechnet wird, ganz oder nur teilweise (Teildatenstruktur der digitalen Signatur) außerhalb des ID-Dokuments und getrennt hiervon in einem Computernetzwerk zu speichern, derart, dass die erste digitale Signatur zumindest teilweise dort abgerufen werden kann, wenn dies gewünscht ist, beispielsweise beim Authentifizieren des personalisierten ID-Dokuments oder anderen Prozessen. Damit dann auf die erste digitale Signatur in Teilen oder insgesamt in dem Computernetzwerk zum Abrufen zugegriffen werden kann, sind in dem elektronischen Chip die ersten Abrufdaten gespeichert, die ausgelesen werden können, um die erste Netzwerk-Abrufinformation zu bestimmen, welche der ersten digitalen Signatur zugeordnet ist, soweit dies außerhalb des Chips gespeichert ist, und genutzt werden kann, um die erste digitale Signatur zumindest teilweise in dem Computernetzwerk abzurufen. Beispielsweise kann die erste Netzwerk-Abrufinformation einen sogenannten Link umfassen, der nutzbar ist, um in dem Computernetzwerk auf die erste digitale Signatur zum Abruf oder Download zuzugreifen.

Mittels zumindest teilweisem Speichern der ersten digitalen Signatur außerhalb des elektronischen Chips wird ein hierfür ansonsten notwendiger Speicherbereich in dem elektronischen Chip eingespart. Aufgrund des üblicherweise nur begrenzt zur Verfügung stehenden Speicherbereichs in dem elektronischen Chip des ID-Dokuments wird so die Möglichkeit geschaffen, andere elektronische Daten in dem elektronischen Chip abzulegen, beispielsweise ergänzende personalisierte Daten. Auch wird es so ermöglicht, in Verbindung mit dem ID-Dokument digitale Signaturen einzusetzen, für die der Speicherplatz auf dem elektronischen Chip ansonsten gar nicht ausreichend wäre. Insbesondere mit neuartigen und potenziell sicherheitserhöhenden Verfahren zum Erzeugen der digitalen Signatur können digitale Signaturen mit einem Datenumfang entstehen, die zwar einen höheren Grad an Sicherheit bereitstellen, deren Datenumfang aber gar nicht in dem Speicherbereich der üblichen elektronischen Chips von ID-Dokumenten passt.

Das Berechnen der ersten digitalen Signatur kann ausschließlich mittels eines Prozessors des elektronischen Chips des ID-Dokuments oder allein mittels eines Prozessors einer von dem ID-Dokument getrennt gebildeten Datenverarbeitungseinrichtung ausgeführt werden, die Teil des Computernetzwerks ein kann, oder getrennt hiervon gebildet ist. Auch das Ausführen von Teilschritten sowohl vom Prozessor des elektronischen Chips wie auch vom Prozessor der Datenverarbeitungseinrichtung kann vorgesehen sein. Die Datenverarbeitungseinrichtung kann für diesen oder andere Prozesse für einen elektronischen Datenaustausch mit dem elektronischen Chip eingerichtet sein, wobei drahtlose und / oder drahtgebundene Datenkommunikation zum Einsatz kommen kann. Geräte, die elektronische Daten vom elektronischen Chip des ID-Dokuments lesen und / oder auf diesen schreiben können, sind als solche in verschiedenen Ausführungsformen bekannt.

Das Speichern der ersten Abrufdaten kann ausschließlich im Speicherbereich des elektronischen Chips erfolgen. Alternativ können die ersten Abrufdaten ausschließlich auf dem Dokumentenkörper aufgebracht sein, beispielsweise als Aufdruck, sei es kodiert oder nichtkodiert. Auch ein kombiniertes Speichern eines Teils der ersten Abrufdaten auf dem Dokumentenkörper und eines anderen Teils der ersten Abrufdaten in dem elektronischen Chip kann vorgesehen sein.

Das ID-Dokument ist nach dem Personalisieren frei von zumindest einer Teildatenstruktur der ersten digitalen Signatur, die sich also, zumindest im Umfang der Teildatenstruktur, nicht auf dem ID-Dokument gespeichert ist, sondern außerhalb in dem Computernetzwerk, wobei sie dort unter Verwendung der ersten Netzwerk-Abrufinformation abgerufen werden kann. Soll dann das personalisierte ID-Dokument verwendet werden, zum Beispiel authentifiziert werden, wird mit Hilfe der ersten Abrufdaten, die die erste Netzwerk-Abrufinformation angeben oder anzeigen, auf die zumindest teilweise außerhalb des Chips gespeicherte erste digitale Signatur im Computernetzwerk zugegriffen, um unter Verwendung der ersten digitalen Signatur insgesamt zum Beispiel die Integrität der personalisierten Daten in dem elektronischen Chip zu prüfen, wobei die Prüfung zumindest teilweise mit dem Prozessor des elektronischen Chips selbst oder zumindest teilweise mit einer Datenverarbeitungseinrichtung außerhalb des elektronischen Chips ausgeführt werden kann. Das hier beispielhaft für die Nutzung der zumindest teilweise außerhalb des elektronischen Chips gespeicherten digitalen Signatur erläuterte Prüfen der Datenintegrität wird in Verbindung mit maschinell lesbaren ID-Dokumenten, insbesondere Reisedokumenten, auch als passive Authentifizierung bezeichnet.

Verfahren zum Berechnen einer digitalen Signatur sind als solche in verschiedenen Ausführungen bekannt, weshalb dies hier nicht weiter erläutert wird.

Das Berechnen der ersten digitalen Signatur kann weiterhin Folgendes umfassen: Berechnen eines jeweiligen Hashwerts für ein erstes Datenobjekt der personalisierten Daten und ein zweites Datenobjekt der personalisierten Daten, welches von dem ersten Datenobjekt verschieden ist; Erzeugen eines Sicherheits-Datenobjekts, welches den jeweiligen Hashwert für das erste und das zweite Datenobjekt umfasst; und Berechnen der ersten digitalen Signatur für das Sicherheits-Datenobjekts mittels des ersten Signaturverfahrens. Die personalisierten Daten umfassen mehrere Datenobjekte, -blöcke oder -gruppen, die in dem elektronischen Chip in einer Verzeichnisstruktur angeordnet sein können. Für die verschiedenen Datenobjekte wird jeweils ein zugeordneter Hashwert berechnet, was mittels des Prozessors des elektronischen Chips und / oder des Prozessors einer hiervon getrennt gebildeten Datenverarbeitungseinrichtung ausgeführt werden kann. Hierauf wird ein Sicherheits-Datenobjekt erzeugt, welches die jeweiligen Hashwerte umfasst. Die erste digitale Signatur wird für das Sicherheits-Datenobjekt mittels des ersten Signaturverfahrens berechnet. Die so bestimmte erste digitale Signatur wird dann außerhalb des elektronischen Chips in dem Computernetzwerk abrufbar gespeichert. Das Sicherheits-Datenobjekt kann beispielsweise dem Dokument-Sicherheits-Objekt (SOD) nach ICAO Doc 9303 entsprechend erzeugt werden. Das Sicherheits-Datenobjekt wird im elektronischen Chip gespeichert.

Das Sicherheits-Datenobjekt kann mit einer Hashbaumdatenstruktur erzeugt werden, welcher den jeweiligen Hashwert für das erste Datenobjekt und das zweite Datenobjekt umfasst. Bei dieser Ausführungsform sind die Hashwerte der Datenobjekte in eine Hashbaumdatenstruktur integriert, die vom Sicherheits-Datenobjekt umfasst ist. Die erste digitale Signatur wird dann für das Sicherheits-Datenobjekt mit der Hashbaumdatenstruktur berechnet. Ein Hashbaum ist allgemein ein Baum aus Hashwerten von Datenblöcken oder -objekten, beispielsweise Dateien. Die Hashbaumdatenstruktur kann auf dem elektronischen Chips des ID-Dokuments oder außerhalb des elektronischen Chips in dem Computernetzwerk gespeichert werden. Beim Speichern außerhalb des elektronischen Chips in dem Computernetzwerk können der gespeicherten Hashbaumdatenstruktur zugeordnete Abrufdaten im elektronischen Chip gespeichert werden, die Netzwerk-Abrufinformation anzeigen, welchen einen Zugriff (Abruf) auf die Hashbaumdatenstruktur im Computernetzwerk ermöglichen.

Für die ersten Abrufdaten kann ein Hashwert berechnet, und das Sicherheits-Datenobjekt kann den Hashwert für die ersten Abrufdaten umfassend erzeugt werden. Das Berechnen des Hashwerts der ersten Abrufdaten kann mittels des Prozessors des elektronischen Chips und / oder dem Prozessor einer getrennt hiervon gebildeten Datenverarbeitungseinrichtung ausgeführt werden. Es kann vorgesehen sein, dass die Hashbaumdatenstruktur, für welche die erste digitale Signatur berechnet wird, den Hashwert des Sicherheits-Datenobjekts umfasst.

Der ersten digitalen Signatur kann zum Unterscheiden von anderen digitalen Signaturen in dem Computernetzwerk ein erstes Ordnungsmerkmal zugeordnet werden, und erste Ordnungsmerkmaldaten, die das erste Ordnungsmerkmal anzeigen, können auf dem Dokumentenkörper und / oder in dem elektronischen Chip gespeichert werden. Das erste Ordnungsmerkmal dient dazu, die erste digitale Signatur für den Abruf in dem Computernetzwerk zu individualisieren und so insbesondere von anderen digitalen Signaturen zu unterscheiden. Bei dieser Ausgestaltung stellen die ersten Abrufdaten und die ersten Ordnungsmerkmaldaten zusammen die Informationen bereit, um die erste digitale Signatur in dem Computernetzwerk abrufen zu können. Für die ersten Ordnungsmerkmaldaten kann vorgesehen sein, einen zugeordneten Hashwert zu berechnen, sei es mittels des Prozessors des elektronischen Chips oder des Prozessors der getrennt gebildeten Datenverarbeitungseinrichtung, und den Hashwert in dem elektronischen Chip zu speichern, beispielsweise in der Hashbaumdatenstruktur. Der Hashwert der ersten Ordnungsmerkmaldaten kann beim Berechnen der ersten digitalen Signatur einbezogen werden, beispielsweise dadurch, dass dieser Hashwert von dem Sicherheits-Datenobjekt umfasst ist.

Die ersten Abrufdaten und / oder die ersten Ordnungsmerkmaldaten können wenigstens teilweise in einem maschinelesbaren Bereich des ID-Dokument gespeichert werden. Der maschinenlesbare Bereich ist üblicherweise auf dem Dokumentenkörper als auslesbarer Bereich gebildet. Die ersten Abrufdaten und / oder die ersten Ordnungsmerkmaldaten können hier in Klarform (nicht kodiert) oder in kodierter Form hinterlegt sein.

Es kann in einer Ausführung des Verfahrens Folgendes vorgesehen sein: Berechnen einer zweiten digitalen Signatur für die personalisierten Daten unter Verwendung eines zweiten Signaturverfahrens, welches von dem ersten Signaturverfahren verschieden ist; Speichern der zweiten digitalen Signatur für die personalisierten Daten außerhalb des elektronischen Chips in dem Computernetzwerk, derart, dass die zweite digitale Signatur unter Verwendung von zweiter Netzwerk-Abrufinformation in dem Computernetzwerk abrufbar ist und Speichern von zweiten Abrufdaten, die die zweite Netzwerk-Abrufinformation anzeigen, auf dem Dokumentenkörper und / oder in dem elektronischen Chip. In Verbindung mit der zweiten digitalen Signatur für die personalisierten Daten gelten die vorangehenden im Zusammenhang mit der ersten digitalen Signatur erläuterten Ausgestaltungsoptionen entsprechend. In einer Ausführung können die erste und die zweite Netzwerk-Abrufinformation gleich sein, so dass diese zum Beispiel auf ein und denselben (adressierbaren) Speicherort in dem Computernetzwerk hinweisen. Die erste und die zweite digitale Signatur können dann anhand eines jeweiligen individualisierenden (ersten und zweiten) Ordnungsmerkmals unterschieden werden, wobei der ersten digitalen Signatur und der zweiten digitalen Signatur unterschiedliche Ordnungsmerkmale zugeordnet sind.

In einer alternativen Ausgestaltung sind die erste und die zweite Netzwerk-Abrufinformation verschieden, so dass die erste und die zweite digitale Signatur allein aufgrund dieses Unterschieds individuell in dem Computernetzwerk abrufbar sind.

Es kann auch vorgesehen sein, dass unterschiedliche digitale Signaturen für verschiedene Datenobjekte, -blöcke oder -gruppen der personalisierte n Daten berechnet und jeweils zugeordnete Netzwerk-Abrufinformationen bereitgestellt und außerhalb des elektronischen Chips in dem Computernetzwerk gespeichert werden.

Die erste digitale Signatur kann für die personalisierten Daten unter Verwendung eines Schlüssels eines ersten kryptografischen Schlüsselpaares berechnet werden. Kryptografische Schlüssel sind als solche in verschiedenen Ausführungsformen bekannt. Beispielsweise umfassen kryptografischen Schlüsselpaare einen privaten und einen öffentlichen Schlüssel.

In den verschiedenen Ausführungen kann / können die digitale(n) Signatur(en) unter Verwendung zumindest eines kryptografischen Algorithmus oder Verfahrens berechnet oder bestimmt werden.

In einer Ausführung des Verfahrens kann Folgendes vorgesehen sein: Speichern eines dem Schlüssel zugeordneten Schlüssels des ersten kryptografischen Schlüsselpaares außerhalb des elektronischen Chips in dem Computernetzwerk, derart, dass der zugeordnete Schlüssel unter Verwendung von Schlüssel-Netzwerk-Abrufinformation in dem Computernetzwerk abrufbar ist; und Speichern von Schlüssel-Abrufdaten, die die Schlüssel-Netzwerk-Abrufinformation anzeigen, auf dem Dokumentenkörper und / oder in dem elektronischen Chip. Beispielsweise kann so der öffentliche Schlüssel des ersten kryptografischen Schlüsselpaares außerhalb des elektronischen Chips in dem Computernetzwerk abrufbar hinterlegt werden. Vergleichbar dem vorangehenden Erläuterungen in Verbindung mit der digitalen Signatur kann dem zugeordneten Schlüssel, welcher außerhalb des elektronischen Chips in dem Computernetzwerk abrufbar gespeichert wird, ein Schlüssel-Ordnungsmerkmal zugeordnet werden, welches den Schlüssel in dem Computernetzwerk zur Unterscheidung von anderen dort gespeicherten Datenobjekten individualisiert, beispielweise anderen Schlüsseln.

In einer Ausführung des Verfahrens kann Folgendes vorgesehen sein: Speichern eines dem ersten kryptografischen Schlüsselpaar zugeordneten elektronischen Zertifikats außerhalb des elektronischen Chips in dem Computernetzwerk, derart, dass das elektronische Zertifikat unter Verwendung von Zertifikat-Netzwerk-Abrufinformation in dem Computernetzwerk abrufbar ist; und Speichern von Zertifikat-Abrufdaten, die die Zertifikat-Netzwerk-Abrufinformation anzeigen, auf dem Dokumentenkörper und / oder in dem elektronischen Chip. Dem elektronischen Zertifikat, welches außerhalb des elektronischen Chips in dem Computernetzwerk abrufbar gespeichert wird, kann ein Zertifikat-Ordnungsmerkmal zugeordnet sein, welches das elektronische Zertifikat von anderen elektronischen Zertifikaten in dem Computernetzwerk unterscheidbar macht.

Bei der Personalisierung kann weiterhin Folgendes vorgesehen sein:
- Berechnen der ersten digitalen Signatur für die personalisierten Daten unter Verwendung des ersten Signaturverfahrens und eines weiteren Signaturverfahrens, derart, dass die erste digitale Signatur als eine erste zusammengesetzte digitale Signatur für die personalisierten Daten berechnet wird, die in eine erste Datenstruktur und eine zweite Datenstruktur teilbar ist;
- Speichern der ersten Datenstruktur der ersten zusammengesetzten digitalen Signatur außerhalb des elektronischen Chips in dem Computernetzwerk, derart, dass die erste Datenstruktur unter Verwendung von erster Netzwerk-Abrufinformation in dem Computernetzwerk (9) abrufbar ist; und
- Speichern der zweiten Datenstruktur der ersten zusammengesetzten digitalen Signatur in dem elektronischen Chip.

Alternativ kann vorgesehen sein, sowohl die erste Datenstruktur wie auch die zweite Daten-struktur der ersten zusammengesetzten digitalen Signatur außerhalb des Chips in dem Computernetzwerk abrufbar zu speichern.

Das erste und das weitere Signaturverfahren können beim Ausführen Vorsehen, dass beim Berechnen der ersten zusammengesetzten digitalen Signatur für die personalisierten Daten ein erstes kryptografischen Verfahren (erster kryptografischer Algorithmus) und ein weiteres kryptografischen Verfahren (weiterer kryptografischer Algorithmus) verwendet werden, die voneinander verschieden sind, insbesondere hinsichtlich kryptografischer Schlüssel, die den kryptografischen Verfahren jeweils zugeordnet sind und beim Erzeugen der ersten zusammengesetzten digitalen Signatur für die personalisierten Daten zum Einsatz kommen.

Die erste zusammengesetzte digitale Signatur, welche insoweit eine unter Anwendung des ersten kryptografischen Verfahrens und des weiteren kryptografischen Verfahrens auf die personalisierten Daten erzeugte Gesamtdatenstruktur (Ergebnisdaten des Berechnens der ersten digitalen Signatur für die personalisierten Daten) bildet, ist einem Kontrollalgorithmus entsprechend in die erste Datenstruktur und eine zweite Datenstruktur trennbar oder teilbar.

Das ID-Dokument kann Vorgaben von ICAO Doc 9303 entsprechend bereitgestellt werden.

Die vorangehend im Zusammenhang mit dem Verfahren zum Personalisieren des ID-Dokuments erläuterten Ausgestaltungen können in Verbindung mit dem Verfahren zum Authentifizieren des personalisierten ID-Dokuments entsprechend vorgesehen sein. Insbesondere können Ordnungsmerkmaldaten ausgelesen und ausgewertet werden, um die erste digitale Signatur in dem Computernetzwerk abzurufen. Ergänzend kann vorgesehen sein, den zugeordneten Schlüssel des ersten kryptografischen Schlüsselpaares und / oder das zugeordnete elektronische Zertifikat für die Authentifizierung des personalisierten ID-Dokuments unter Verwendung der jeweils zugeordneten Netzwerk-Abrufinformation aus dem Computernetzwerk abzurufen und im Rahmen der Authentifizierung zu verwenden.

Das Prüfen der Integrität der personalisierten Daten kann weiterhin Folgendes umfassen: Berechnen eines jeweiligen Hashwerts für ein erstes Datenobjekt der personalisierten Daten und ein zweites Datenobjekt der personalisierten Daten, welches von dem ersten Datenobjekt verschieden ist; und Vergleichen des jeweiligen Hashwerts mit gespeicherten Hashwerten, die jeweils für das erste und das zweite Datenobjekt in dem elektronischen Chip gespeichert sind.

Das Prüfen der Integrität der personalisierten Daten kann weiterhin Folgendes umfassen: Berechnen eines Hashwerts für einen Hashbaum, welcher den jeweiligen Hashwert für das erste und das zweite Datenobjekt in einer Datenbaumstruktur umfasst; und Vergleichen des Hashwerts für den Hashbaum mit einem Hashwert, der für den Hashbaum in dem elektronischen Chip gespeichert ist.

Mittels der Authentifizierung kann geprüft werden, ob die auf dem personalisierten ID-Dokument gespeicherten personalisierten Daten beschädigt oder komprimiert (fehlende Datenintegrität) sind.

Im Zusammenhang mit dem personalisierten ID-Dokument können die vorangehend erläuterten Ausgestaltungen entsprechend vorgesehen sein.

### Beschreibung von Ausführungsbeispielen

Im Folgenden werden weitere Ausführungsbeispiele unter Bezugnahme auf Figuren einer Zeichnung erläutert. Hierbei zeigen:
- Fig. 1: eine schematische Darstellung einer Anordnung beim Personalisieren eines ID-Dokuments;
- Fig. 2: eine schematische Blockdarstellung zum Erläutern eines Verfahrens zum Personalisieren eines ID-Dokuments;
- Fig. 3: eine schematische Darstellung einer Anordnung beim Authentifizieren eines personalisierten ID-Dokuments;
- Fig. 4: eine schematische Blockdarstellung zum Erläutern eines Verfahrens zum Authentifizieren eines personalisierten ID-Dokuments;
- Fig. 5: ein exemplarisches Flussdiagramm einer Ausgestaltung eines Verfahrens zum Berechnen der ersten digitalen Signatur für die personalisierten Daten und deren Prüfen, wobei mehrere kryptografische Algorithmen verwendet werden;
- Fig. 6: eine schematische Darstellung eines ersten Kontrollalgorithmus und einer Daten-struktur mit den gemäß dem ersten Kontrollalgorithmus erzeugten zusammengesetzten kryptographischen Daten;
- Fig. 7: eine schematische Darstellung zur Anwendung eines anderen ersten Kontrollalgorithmus und einer Datenstruktur mit den gemäß diesem erzeugten zusammengesetzten kryptographischen Daten und
- Fig. 8: eine schematische Darstellung zur Anwendung eines weiteren ersten Kontrollalgorithmus und einer Datenstruktur mit den gemäß diesem erzeugten zusammengesetzten kryptographischen Daten.

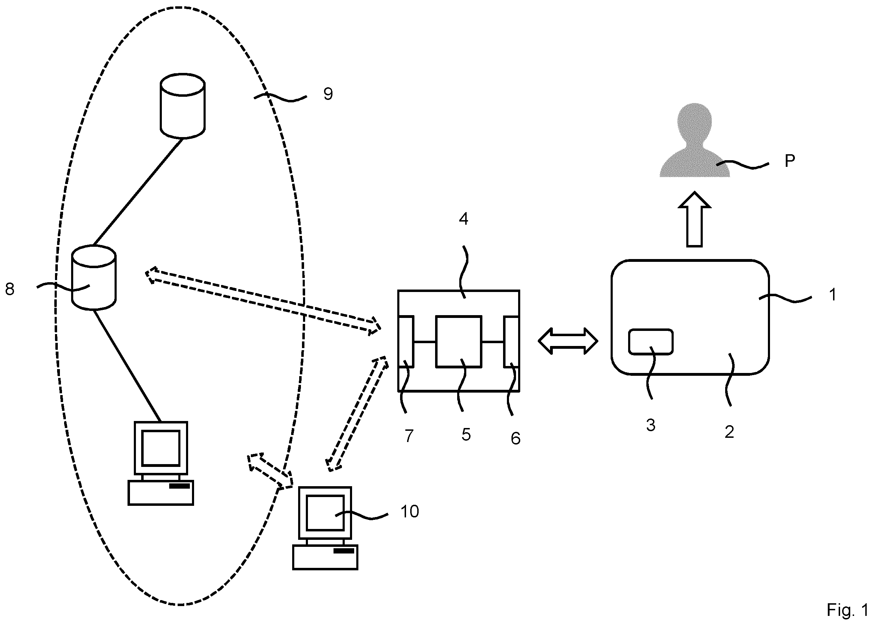

Fig. 1 zeigt eine schematische Darstellung einer Anordnung zum Personalisieren eines ID-Dokuments 1. Das ID-Dokument 1 dient als Nachweis für die Identität einer Person P und ist beispielsweise als eine sogenannte Chipkarte ausgeführt. Das ID-Dokument 1 weist einen Dokumentenkörper 2 und einen hierin eingebetteten elektronischen Chip 3 auf, der von außen elektronische Daten empfangen und elektronische Daten nach außen abgeben kann, wie dieses als solches bekannt ist. Zum Schreiben und / oder Lesen der elektronischen Daten ist ein Gerät 4 vorgesehen, welches zur Verarbeitung elektronischer Daten einen Prozessor 5 aufweist. Über Schnittstellen 6, 7 kann das Gerät 4, bei dem es sich beispielsweise um ein Schreib- / Lesegerät handelt, elektronische Daten einerseits mit dem elektronischen Chip 3 und andererseits mit einer Speichereinrichtung 8 austauschen, die Teil eines Computernetzwerkes 9 ist. Darüber hinaus ist eine getrennt gebildet Datenverarbeitungseinrichtung 10 vorgesehen, die mit dem Gerät 4 sowie dem Computernetzwerk 9 elektronische Daten austauschen kann, sei es durch drahtlose und / oder drahtgebundene Datenkommunikation.

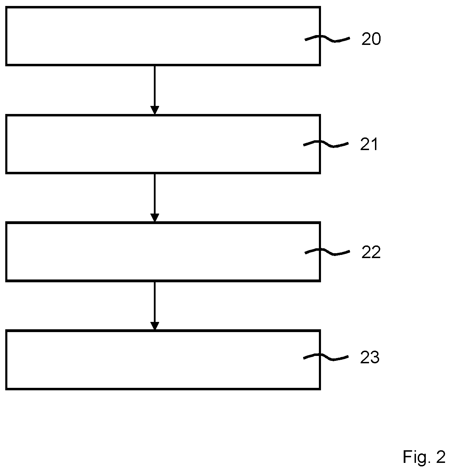

Unter Bezugnahme auf Fig. 2 wird nachfolgend ein Verfahren zum Personalisieren des ID-Dokuments 1 beschrieben. Das Personalisieren kann vor oder nach dem Einbetten des elektronischen Chips 3 in den Dokumentenkörper 2 ausgeführt werden. Auch das Ausführen von Teilschritten vor und nach dem Einbetten des elektronischen Chips 3 kann vorgesehen. Im Schritt 20 werden personalisierte Daten, die der Person P zugeordnet sind und für eine Identifizierung dieser Person P nutzbar sind, in dem elektronischen Chip 3 gespeichert, zum Beispiel in Form von Datenblöcken oder -objekten, die in einer Verzeichnisstruktur abgelegt sein können.

Im Schritt 21 wird eine erste digitale Signatur für die personalisierten Daten unter Verwendung eines ersten Signaturverfahrens bestimmt. Hierbei kann zum Beispiel vorgesehen sein, dass für Datenobjekte, die jeweils einen Teil der personalisierten Daten umfassen, ein jeweiliger Hashwert mittels einer Hashfunktion bestimmt wird. Die so bestimmten Hashwerte können in einem Hashbaum einer Datenbaumstruktur entsprechend zusammengefasst werden. Zum Berechnen der ersten digitalen Signatur kann optional vorgesehen sein, für den Hashbaum unter Verwendung eines privaten Schlüssels eines kryptografischen Schlüsselpaares die digitale Signatur zu berechnen.

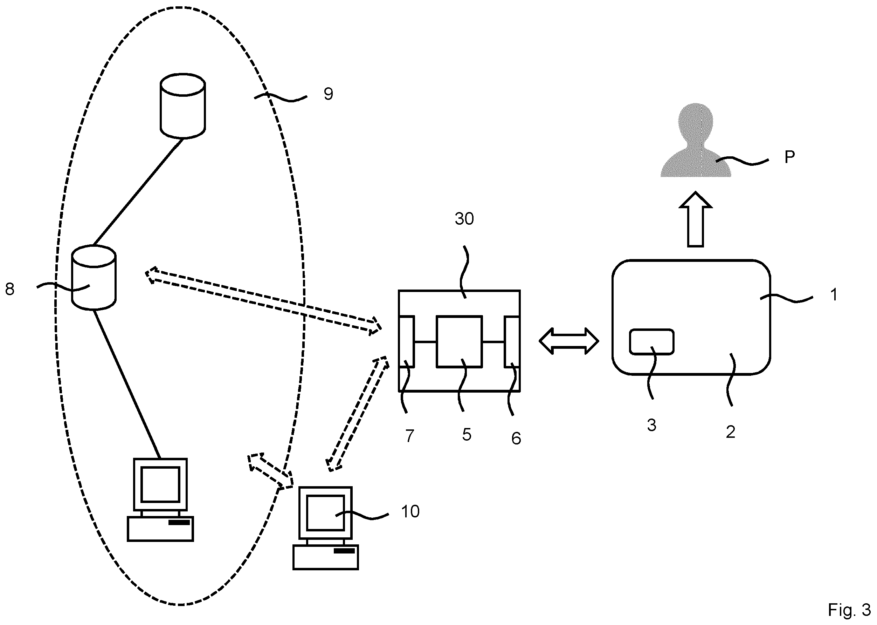

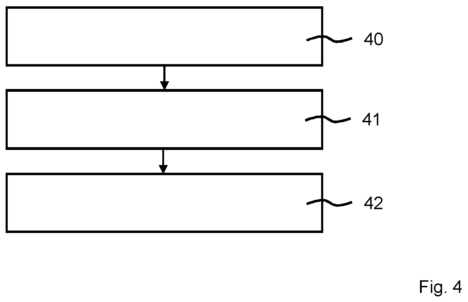

Die digitale Signatur wird im Schritt 22 außerhalb des elektronischen Chips 3 in der Speichereinrichtung 8 des Computernetzwerks 9 gespeichert, derart, dass die digitale Signatur unter Verwendung von Netzwerk-Abrufinformation in dem Computernetzwerk 9 abrufbar ist, beispielsweise durch das Gerät 4. Im Schritt 23 werden in dem elektronischen Chip 3 und / oder auf dem Dokumentenkörper 2 Abrufdaten gespeichert, die die erste Netzwerk-Abrufinformation anzeigen und auslesbar sind. Das ID-Dokument 1 umfasst die digitale Signatur für die personalisierten Daten daher selbst nicht. Vielmehr ist die digitale Signatur in der Speichereinrichtung 8 des Computernetzwerks getrennt von dem ID-Dokument 1 hinterlegt, so dass sie dort mittels Auswerten der Abrufdaten, die ihrerseits in dem elektronischen Chip 3 gespeichert sind, abgerufen werden kann, beispielsweise zum Authentifizieren des ID-Dokuments, wie dies nachfolgend beispielhaft unter Bezugnahme auf die Fig. 3 und 4 erläutert wird).

Fig. 3 zeigt eine schematische Darstellung einer Anordnung zum Authentifizieren des personalisierten ID-Dokuments 1. Für gleiche Merkmale werden dieselben Bezugszeichen wie in Fig. 1 verwendet. Unter Bezugnahme auf Fig. 4 wird nachfolgend ein Ausführungsbeispiel für das Verfahren zum Authentifizieren beschrieben.

Im Schritt 40 werden Abrufdaten, die auf dem Dokumentenkörper 2 und / oder in dem elektronischen Chip 3 gespeichert sind, mittels eines Auslesegeräts 30 ausgelesen. Das Auslesegerät 30, welches zur Datenverarbeitung den Prozessor 5 aufweist, entnimmt den Abrufdaten die Netzwerk-Abrufinformation für die digitale Signatur und ruft diese dann unter Verwendung der Netzwerk-Abrufinformation in der Speichereinrichtung 8 des Computernetzwerks 9 ab (Schritt 41). Im Schritt 42 wird die abgerufene digitale Signatur verwendet, um die Integrität der auf dem elektronischen Chip 3 gespeicherten personalisierten Daten zu prüfen. In einer Ausführungsform kann hierbei vorgesehen sein, dass zum Prüfen der Datenintegrität für mehrere Datenobjekte, die jeweils einen Teil der personalisierten Daten umfassen und in dem elektronischen Chip 3 gespeichert sind, ein Hashwert bestimmt wird, welcher mit in dem elektronischen Chip 3 zum Zeitpunkt der Personalisierung gespeicherten Hashwerten für die Datenobjekte verglichen werden. Wenn die Hashwerte übereinstimmen, kann die Integrität der geprüften personalisierten Daten festgestellt werden. Anderenfalls sind die personalisierten Daten auf dem ID-Dokument 1 kompromittiert.

Es kann alternativ vorgesehen sein, aus dem Computernetzwerk 9 den öffentlichen Schlüssel des kryptografischen Schlüsselpaares, welcher dem privaten Schlüssel zugeordnet ist, der seinerseits zum Berechnen der digitalen Signatur verwendet wurde, und / oder ein zugeordnetes elektronisches Zertifikat abzurufen. Öffentlicher Schlüssel und elektronisches Zertifikat können vergleichbar der digitalen Signatur in dem Computernetzwerk 9 abrufbar gespeichert sein, wobei jeweils zugeordnete Netzwerk-Abrufinformation in dem elektronischen Chip 3 hinterlegt ist.

In einer Ausgestaltung werden mehrere Datenobjekte von dem ID-Dokument 1 gelesen, und es wird ein jeweiliger Hashwert für die Datenobjekte bestimmt. Beispielweise kann es sich hierbei um Namens- und Geburtsdatumsinformation handeln. Die so bestimmten Hashwerte werden mit zugeordneten Hashwerten auf dem ID-Dokument 1 verglichen, die bei der Personalisierung hierauf aufgebracht / gespeichert wurden. Wahlweise kann dies für Datenobjekte in einer Hashbaumdatenstruktur ausgeführt werden. Sodann kann die digitale Signatur unter Verwendung der Netzwerk-Abrufinformation in der Speichereinrichtung 8 des Computernetzwerks 9 abgerufen werden, um sie mit der digitalen Signatur zu vergleichen, die für die Hashwerte der Datenobjekte / Hashbaumdatenstruktur bestimmt wurde. Weiterhin kann vorgesehen sein, zugehörige Zertifikate und wahlweise Zertifikatsketten eines Ausstellers der Zertifikate zu prüfen.

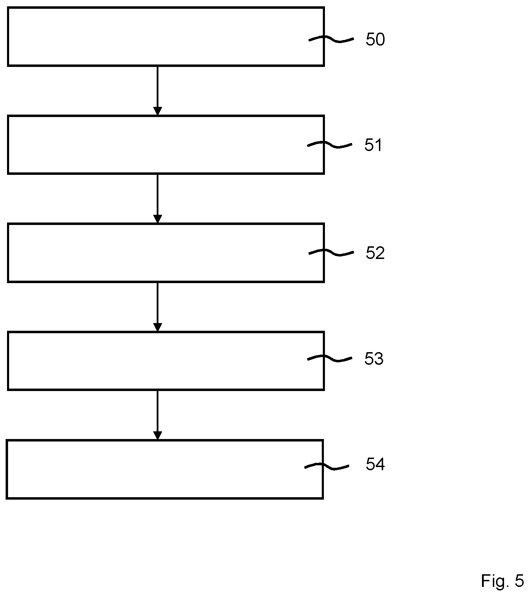

Fig. 5 zeigt ein exemplarisches Flussdiagramm einer Ausgestaltung eines Verfahrens zum Berechnen der ersten digitalen Signatur für die personalisierten Daten unter Verwendung wenigstens eines ersten und eines weiteren Signaturverfahrens beim Personalisieren des ID-Dokuments 1 sowie zum Authentifizieren des personalisierten ID-Dokuments 1. Bei dem Ausführungsbeispiel ist für die wenigstens zwei Signaturverfahren die Verwendung eines jeweiligen kryptografischen Algorithmus vorgesehen, wobei sich die kryptografischen Algorithmen der Signaturverfahren unterscheiden, insbesondere hinsichtlich der jeweils verwendeten kryptografischen Schlüssel.

Das Ausführungsbeispiel gemäß Fig. 5 kann insbesondere den Vorteil haben, dass eine große Agilität bei der Nutzung von Kryptoalgorithmen unterstützt wird, die es erlaubt, zur Verbesserung der Sicherheit mehrere kryptographische Algorithmen zu verwenden.

In einem Schritt 50 werden die personalisierten Daten bereitgestellt. In Schritt 51 wird nicht nur ein einzelner kryptographischer Algorithmus auf die personalisierten Daten (oder iterativ auf die Ausgaben anderer kryptographischer Algorithmen) angewendet, sondern zwei oder mehr kryptographische Algorithmen. Die hierbei verwendeten kryptographischen Algorithmen werden hier auch als "erste kryptographische Algorithmen" bezeichnet. Es kann eine größere Anzahl an kryptographischen Algorithmen implementiert sein, als tatsächlich zum Erzeugen von zusammengesetzten kryptographischen Daten (erste digitale Signatur) aus den personalisierten Daten eingesetzt werden, sei es im Chip 3 und / oder dem Computernetzwerk 9. Die Auswahl dieser kryptographischen Algorithmen und / oder die Art und Weise, wie diese kombiniert werden, kann in einem ersten Kontrollalgorithmus spezifiziert sein. Dies kann zum Beispiel derart implementiert sein, dass Algorithmenbezeichner, die jeweils zumindest einen der ersten kryptographischen Algorithmen identifizieren, sowie optional einige Komponentenparameter und / oder Kontrollparameter dem ersten Kontrollalgorithmus als Argument übergeben werden, wobei der erste Kontrollalgorithmus die einzelnen kryptographischen Algorithmen so ausführt, dass die ihnen zugehörenden Komponentenparametern als Argument übergeben werden.

In Schritt 52 werden die mittels der mehreren ersten kryptographischen Algorithmen ausgehend von den personalisierten Daten berechneten zusammengesetzten kryptographischen Daten, also die zusammengesetzte erste digitale Signatur (Gesamtdatenstruktur), in wenigsten zwei Teildatenstrukturen unterteilt oder getrennt, so dass eine erste und eine zweite (Teil-)Datenstruktur separat vorliegen und getrennt speicherbar sind. Hierbei ist in unterschiedlichen Ausführungen vorgesehen, die erste und / oder die zweite Datenstruktur außerhalb des Chips 3 in dem Computernetzwerk 9 abrufbar zu speichern, wie dies vorangehend beschrieben wurde. Wenn die erste und die zweite Datenstruktur beide außerhalb des Chips 3 in dem Computernetzwerk 9 gespeichert werden, können diese gemeinsam gemäß der ersten Netzwerk-Abrufinformation in dem Computernetzwerk 9 abrufbar sein. Alternativ kann vorgesehen sein, dass die erste und die zweite Datenstruktur getrennt gespeichert und gemäß verschiedener Netzwerk-Abrufinformation im Computernetzwerk 9 abrufbar sind.

Beispielsweise kann der erste Kontrollalgorithmus eine Auswahl und / oder die Art (zum Beispiel die Reihenfolge und / oder den Modus sequenziell oder parallel) spezifizieren, welche der ersten kryptographischen Algorithmen wie miteinander kombiniert werden sollen, um die zusammengesetzten kryptographischen Daten zu erhalten.

Die zusammengesetzten kryptographischen Daten oder eine Teildatenstruktur hiervon können zusammen mit einem Identifikator eines zweiten Kontrollalgorithmus und mit Parametern (Algorithmenbezeichner der ersten und implizit damit auch der zweiten kryptographischen Algorithmen, und optional auch Komponentenparameter und / oder Kontrollparameter des zweiten Kontrollalgorithmus) bereitgestellt werden. Die Parameter werden auch als "zusammengesetzte Parameter" bezeichnet.

Die Ausgabe des ersten Kontrollalgorithmus, die zusammengesetzten kryptographischen Daten und optional auch die Parameter, können als Ausgabe eines neuen, aus mehreren einzelnen kryptographischen Algorithmen zusammengesetzten Algorithmus betrachtet werden.

Beim Prüfen der personalisierten Daten werden in einem ersten Schritt 53 die zusammengesetzten kryptographischen Daten (zusammengesetzte erste digitale Signatur) bereitgestellt, nachdem zuvor die außerhalb des Chips 3 in dem Computernetzwerk 9 gespeicherten (Teil-)Datenstruktur(en) abgerufen wurden. In einem Schritt 54 werden die zusammengesetzten kryptographischen Daten verarbeitet, um Ergebnisdaten zu erhalten. Die Verarbeitung der zusammengesetzten kryptographischen Daten erfolgt mittels eines oder mehrerer zweiter kryptographischer Algorithmen. Die Auswahl und / oder Koordination und Kombination der ein oder mehreren zweiten kryptographischen Algorithmen erfolgt durch den zweiten Kontrollalgorithmus, der vorzugsweise die Algorithmenbezeichner der zweiten kryptographischen Algorithmen als Argument empfängt. Die Algorithmenbezeichner können zum Beispiel mit optional zusätzlich vorhandenen Kontrollparametern und / oder Komponentenparametern aus der Datenstruktur gelesen werden.

Der zweite Kontrollalgorithmus kann mittels eines Identifikators festgelegt werden, welcher zusammen mit den zusammengesetzten kryptographischen Daten bereitgestellt wurde. Es ist möglich, dass nur ein einzelner zweiter kryptographischer Algorithmus zur Verarbeitung der zusammengesetzten ersten digitalen Signatur verwendet wird, obwohl mehrere erste kryptographische Algorithmen zur Berechnung der zusammengesetzten kryptographischen Daten verwendet wurden.

Die nach dem ersten Kontrollalgorithmus beim Berechnen der zusammengesetzten ersten digitalen Signatur verwendeten (ersten) kryptographischen Algorithmen können gleich den beim Prüfen der personalisierten Daten (anhand der zusammengesetzten ersten digitalen Signatur) gemäß den nach dem zweiten Kontrollalgorithmus verwendeten zweiten kryptographischen Algorithmen sein.

Schließlich führt im Schritt 62 entschieden, ob die Authentifizierung der Person anhand des personalisierten ID-Dokuments 1 erfolgreich war, was die Korrektheit der Prüfung der personalisierten Daten anhand der zusammengesetzten ersten digitalen Signatur erfordert.

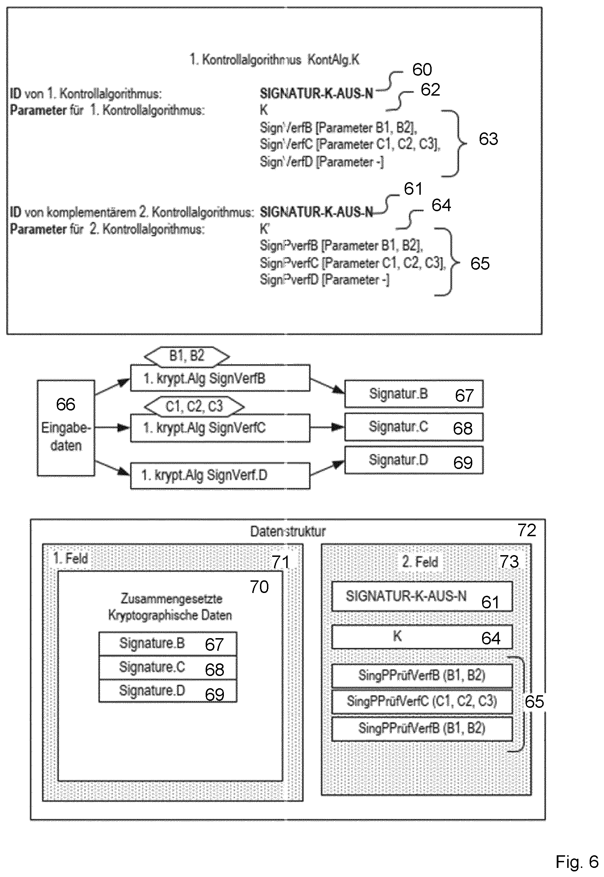

Fig. 6 zeigt eine schematische Darstellung eines ersten Kontrollalgorithmus und einer Datenstruktur mit den gemäß dem ersten Kontrollalgorithmus erzeugten zusammengesetzten kryptographischen Daten. In dem ersten Kontrollalgorithmus sind zum Beispiel ein Identifikator 60 des ersten Kontrollalgorithmus vorgegeben sowie ein Identifikator 61 desjenigen zweiten Kontrollalgorithmus, der zur Verarbeitung der erzeugten zusammengesetzten kryptographischen Daten (zusammengesetzte erste digitale Signatur) verwendet werden soll. Die Identifikatoren 60, 61 sind typischerweise identisch, können in manchen Ausführungsformen aber auch unterschiedlich sein.

Der erste Kontrollalgorithmus wird vorzugsweise so ausgeführt, dass er eine Reihe von Parametern 62, ..., 65 als Eingabe verwendet und / oder ausgibt. Beispielsweise umfassen die Parameter 63 Algorithmenbezeichner derjenigen ersten kryptographischen Algorithmen, die zur Erzeugung der zusammengesetzten kryptographischen Daten verwendet werden sollen, optional von diesen benötigte Komponentenparameter (zum Beispiel B1, B2 für Signieralgorithmus / Signaturprüfalgorithmus B, Komponentenparameter C1, C2 und C3 für Signieralgorithmus / Signaturprüfalgorithmus C, der Signieralgorithmus / Signaturprüfalgorithmus D benötigt keine Komponentenparameter) sowie optional auch Kontrollparameter 62, 64 für den ersten (und ggf. auch für den funktional korrespondierenden zweiten) Kontrollalgorithmus selbst.

So könnte zum Beispiel ein Kontrollparameter 62, 61 bei SIGNATUR K-aus-N den Wert K aus der Menge der ersten kryptographischen Algorithmen spezifizieren. Der Wert K ist eine Zahl kleiner gleich N und spezifiziert die Mindestanzahl von Signaturen, die als valide verifiziert werden müssen, damit die von dem zweiten Kontrollalgorithmus in seiner Gesamtheit durchgeführte zusammengesetzte Signaturprüfung zum Ergebnis hat, dass ein signiertes Dokument valide ist. Bei SCHLÜSSELVEREINBARUNG kann zum Beispiel die Bitlänge, auf die die Ergebnisse der Einzelalgorithmen gekürzt oder gepaddet werden müssen, als Kontrollparameter verwendet werden. Wie die ersten und / oder zweiten Algorithmen kombiniert werden sollen, ist durch den Identifikator des ersten bzw. zweiten Kontrollalgorithmus vorgegeben, zum Beispiel UND / ODER / AGGREGAT / etc.

In dem in Fig. 6 gezeigten Beispiel kann N zum Beispiel 3 sein und K 2 sein. Das bedeutet, dass die durch die Algorithmenbezeichner bezeichneten drei digitalen Signierverfahren B, C und D jeweils auf die Eingabedaten 66, also die personalisierten Daten, angewendet werden, wobei die Algorithmen B und C Komponentenparameter B1, B2, C1, C2, C3 verwenden. Die erhaltenen digitalen Signaturen 67, 68, 69 werden konkateniert und als die zusammengesetzten kryptographischen Daten 70 (zusammengesetzte erste digitale Signatur) zum Beispiel in einem ersten Feld 71 einer Datenstruktur 72 gespeichert werden, die hier ein X.509-Zertifikat ist. Der Identifikator 61 des zweiten Kontrollalgorithmus sowie mehrere von diesem zu verwendende Parameter 64, 65 werden in einem zweiten Feld 73 der Datenstruktur gespeichert. Zu den Parametern gehören die Algorithmenbezeichner B, C und D, die Komponentenparameter B1, B2, C1, C2, C3 sowie der Kontrollparamter K=2.

Hierdurch können Kryptosysteme, die X.509 Zertifikate verwenden, auf Quanten-computersichere kryptographische Verfahren vorbereitet und umgestellt werden. Es kann vorgesehen sein, mehrere Quantencomputer-sichere kryptographische Verfahren aus verschiedenen mathematischen Problemklassen sowie ein oder mehrere konventionelle kryptographische Verfahren zur Erzeugung der zusammengesetzten kryptographischen Daten zu verwenden. Dies hat den Vorteil, dass die auf der Basis einer solchen Kombination aus herkömmlichen und neuen kryptographischen Algorithmen erzeugten zusammengesetzten Signaturen, Chiffrate und / oder Schlüssel auch von Anwendungen verwendet werden können, die noch keine Quantencomputer-sicheren kryptographischen Verfahren implementiert haben.

Von den für die personalisierten Daten berechneten digitalen Signaturen 67, 68, 69 wird dann mindestens eine außerhalb des Chips 3 in dem Computernetzwerk 9 gespeichert, wie dies vorangehend erläutert wurde. Eine oder höchstens zwei der digitalen Signaturen 67, 68, 69 können auf dem Chip 3 gespeichert werden.

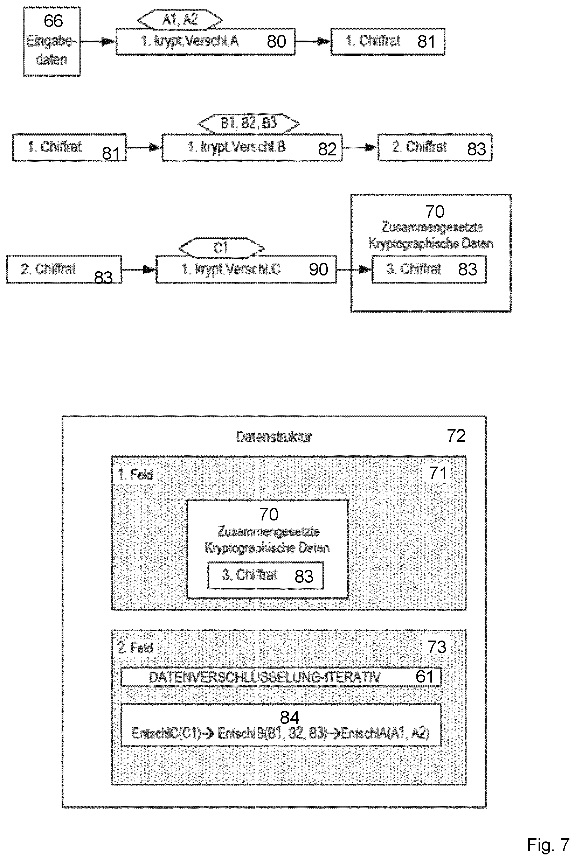

Fig. 7 zeigt eine schematische Darstellung zur Anwendung eines anderen ersten Kontrollalgorithmus und einer Datenstruktur mit den gemäß diesem erzeugten zusammengesetzten kryptographischen Daten.

Während Fig. 6 die parallele Anwendung mehrerer erster kryptographischer Algorithmen auf die Eingabedaten 66 illustriert, also die personalisierten Daten, zeigt Fig. 7 die sequentielle (iterative) Anwendung mehrerer erster Algorithmen auf die Eingabedaten. Hierbei wird zunächst ein erster kryptographischer Algorithmus A 80 direkt auf die Eingabedaten 66 angewandt, um ein erstes Chiffrat 81 zu erzeugen. Dieses wiederum dient als Eingabe für einen zweiten kryptographischen Algorithmus B 82, der das Chiffrat 81 verschlüsselt, um ein weiteres Chiffrat 83 zu erzeugen. Das Verfahren kann iterativ mehrfach angewandt, werden, bis der zuletzt angewandte Algorithmus ein Chiffrat 83 ausgibt, welches als zusammengesetzte kryptographische Daten verwendet wird.

Bei iterativer Anwendung der ersten kryptographischen Algorithmen ist der zweite Kontrollalgorithmus typischerweise nicht vom "ODER"-Typ, da sämtliche zweiten kryptographischen Algorithmen, die komplementär zu den iterativ angewandten ersten kryptographischen Algorithmen sind und beim Authentifizieren des personalisierten ID-Dokuments 1, angewendet werden müssen, um die Eingabedaten zu rekonstruieren, also die zusammengesetzte erste digitale Signatur. Fehlt auch nur einer dieser zweiten kryptographischen Algorithmen in der Kette, kann das Verfahren nicht durchgeführt werden. Dennoch kann auch eine iterative Anwendung von ersten kryptographischen Algorithmen im Kontext der Umstellung auf Quantencomputer-sichere Verfahren hilfreich sein. Beispielsweise könnten die drei zuerst angewandten Verschlüsselungsalgorithmen herkömmliche, nicht Quanten-sichere Verschlüsselungsverfahren sein. Bereits durch den Umstand, dass mehrere Verfahren angewendet werden, erhöht sich die Sicherheit.

Das Chiffrat 83 stellt die zusammengesetzten kryptographischen Daten oder einen Bestandteil derselben dar und wird in einem ersten Feld 71 der vordefinierten Datenstruktur 72 gespeichert, in welchem standardgemäß kryptographische Daten eines einzelnen kryptographischen Algorithmus gespeichert werden. Der Identifikator 61 des "DATENVERSCHLÜSSELUNG-ITERATIV" Kontroallalgorithmus sowie zugehörige Parameter, insbesondere die Algorithmenbezeichner der funktional komplementären Entschlüsselungsalgorithmen C, B und A mit den jeweils benötigten Komponentenparametern 84 werden in einem zweiten Feld 85 dieser Daten-struktur gespeichert, in welchem standardgemäß Identifikatoren und Parameter eines einzelnen kryptographischen Algorithmus gespeichert werden. Da das Empfänger-Kryptosystem unmittelbar Zugriff auf die Algorithmenbezeichner aller zur Entschlüsselung benötigten Algorithmen A, B, C im zweiten Feld 85 hat, kann es entscheiden, eine Entschlüsselung und den entsprechenden zweiten Kontrollalgorithmus von vorneherein nicht durchzuführen, wenn es mindestens einen der benötigten zweiten kryptographischen Algorithmen nicht unterstützt.

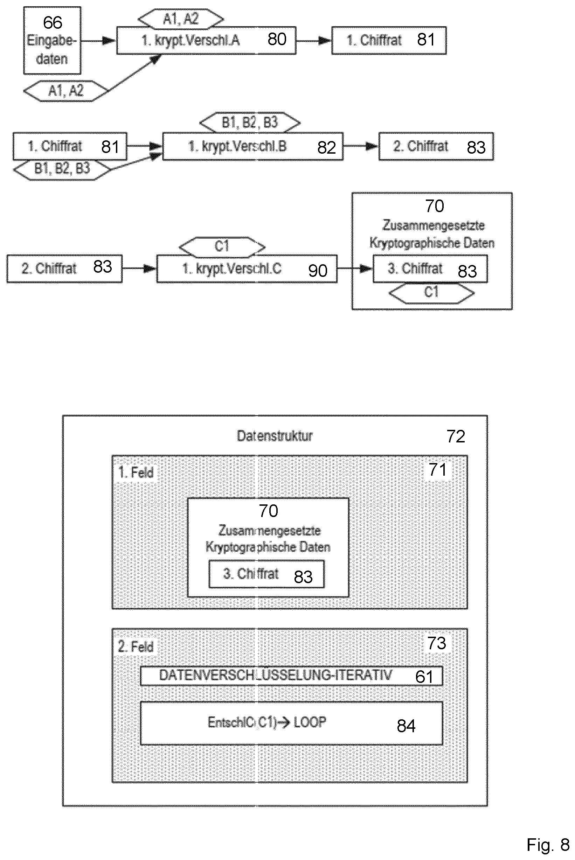

Fig. 8 zeigt eine schematische Darstellung zur Anwendung eines weiteren ersten Kontrollalgorithmus und einer Datenstruktur mit den gemäß diesem erzeugten zusammengesetzten kryptographischen Daten. Die Anwendung dieses ersten Kontrollalgorithmus ähnelt dem unter Bezugnahme auf Fig. 7 beschriebenen Algorithmus, mit dem Unterschied, dass die Komponentenparameter der jeweiligen Verschlüsselungsalgorithmen zusammen mit den vom zuvor jeweils berechneten Chiffrat als Input verwendet werden, um das Chiffrats des nächsten Schritts in der Sequenz zu berechnen. In diesem Fall müssen lediglich Algorithmenbezeichner und Komponentenparameter des zuletzt ausgeführten Verschlüsselungsalgorithmus 90 C bzw. des zuerst auszuführenden Entschlüsselungsalgorithmus als Parameter im Klartext zusammen mit den zusammengesetzten kryptographischen Daten 70 beim Authentifizieren des ID-Dokuments 1 bereitgestellt werden, die Algorithmenbezeichner und Komponentenparameter der anderen Ver- bzw. Entschlüsselungsalgorithmen B, A ergeben sich während der Entschlüsselung.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: ID-Dokument
- 2: Dokumentenkörper
- 3: elektronischer Chip
- 4: Gerät
- 5: Prozessor
- 6, 7: Schnittstelle
- 8: Speichereinrichtung
- 9: Computernetzwerk
- 10: Datenverarbeitungseinrichtung
- 20 ... 23: Verfahrensschritte
- 30: Auslesegerät
- 40 ... 44: Verfahrensschritte
- 50 ... 54: Verfahrensschritte
- 60: Indikator erste Kontrollalgorithmus
- 61: Indikator zweiten Kontrollalgorithmus
- 62 ... 65: Parameter, Algorithmdenbezeichner und Komponentenparameter der ersten kryptografischen Algorithmen
- 66: Eingabedaten (personalisierte Daten)
- 67 ... 69: Signatur erzeugt von Signieralgorithmus
- 70: kryptografische Daten
- 71: erstes Feld
- 72: Datenstruktur
- 73: zweites Feld
- 80: kryptografischer Algorithmus A
- 81: erstes Chiffrat
- 82: kryptografischer Algorithmus B
- 83: weiteres Chiffrat
- 84: Parameter des zweiten Kontrollalgorithmus
- 85: zweites Feld
- 90: kryptografischer Algorithmus C

## Patentansprüche

1. Verfahren zum Personalisieren eines ID-Dokuments (1), bei dem ein ID-Dokument (1) mit einem in einen Dokumentenkörper (2) eingebetteten elektronischen Chip (3) bereitgestellt wird, wobei vor und / oder nach dem Einbetten des elektronischen Chips (3) in den Dokumentenkörper (2) bei einer Personalisierung Folgendes vorgesehen ist:
- Speichern von personalisierten Daten in dem elektronischen Chip (3); und
- Berechnen einer ersten digitalen Signatur für die personalisierten Daten unter Verwendung eines ersten Signaturverfahrens;
**gekennzeichnet durch**
- Speichern der ersten digitalen Signatur für die personalisierten Daten zumindest teilweise außerhalb des elektronischen Chips (3) in einem Computernetzwerk (9), derart, dass die erste digitale Signatur unter Verwendung von erster Netzwerk-Abrufinformation zumindest teilweise in dem Computernetzwerk (9) abrufbar ist; und
- Speichern von ersten Abrufdaten, die die erste Netzwerk-Abrufinformation anzeigen, auf dem Dokumentenkörper (2) und / oder in dem elektronischen Chip (3).

2. Verfahren nach Anspruch 1, **dadurch gekennzeichnet, dass** das Berechnen der ersten digitalen Signatur weiterhin Folgendes umfasst:
- Berechnen eines jeweiligen Hashwerts für ein erstes Datenobjekt der personalisierten Daten und ein zweites Datenobjekt der personalisierten Daten, welches von dem ersten Datenobjekt verschieden ist;
- Erzeugen eines Sicherheits-Datenobjekts, welches den jeweiligen Hashwert für das erste und das zweite Datenobjekt umfasst; und
- Berechnen der ersten digitalen Signatur für das Sicherheits-Datenobjekts mittels des ersten Signaturverfahrens.

3. Verfahren nach Anspruch 2, **dadurch gekennzeichnet, dass** das Sicherheits-Datenobjekt mit einer Hashbaumdatenstruktur erzeugt wird, welcher den jeweiligen Hashwert für das erste Datenobjekt und das zweite Datenobjekt umfasst.

4. Verfahren nach Anspruch 2 oder 3, **dadurch gekennzeichnet, dass** für die ersten Abrufdaten ein Hashwert berechnet und das Sicherheits-Datenobjekt den Hashwert für die ersten Abrufdaten umfassend erzeugt wird.

5. Verfahren nach mindestens einem der vorangehenden Ansprüche, dadurch **ge- kennzeichnet**, dass der ersten digitalen Signatur zum Unterscheiden von anderen digitalen Signaturen in dem Computernetzwerk (9) ein erstes Ordnungsmerkmal zugeordnet wird und erste Ordnungsmerkmaldaten, die das erste Ordnungsmerkmal anzeigen, auf dem Dokumentenkörper (2) und / oder in dem elektronischen Chip (3) gespeichert werden.

6. Verfahren nach mindestens einem der vorangehenden Ansprüche, **dadurch gekennzeichnet, dass** die ersten Abrufdaten und / oder die ersten Ordnungsmerkmaldaten wenigstens teilweise in einem maschinelesbaren Bereich des ID-Dokument (1) gespeichert werden.

7. Verfahren nach mindestens einem der vorangehenden Ansprüche, **gekenn- zeichnet** durch
- Berechnen einer zweiten digitalen Signatur für die personalisierten Daten unter Verwendung eines zweiten Signaturverfahrens, welches von dem ersten Signaturverfahren verschieden ist;
- Speichern der zweiten digitalen Signatur für die personalisierten Daten außerhalb des elektronischen Chips (3) in dem Computernetzwerk (9), derart, dass die zweite digitale Signatur unter Verwendung von zweiter Netzwerk-Abrufinformation in dem Computernetzwerk (9) abrufbar ist; und
- Speichern von zweiten Abrufdaten, die die zweite Netzwerk-Abrufinformation anzeigen, auf dem Dokumentenkörper (2) und / oder in dem elektronischen Chip (3).

8. Verfahren nach mindestens einem der vorangehenden Ansprüche, dadurch **ge- kennzeichnet**, dass die erste digitale Signatur für die personalisierten Daten unter Verwendung eines Schlüssels eines ersten kryptografischen Schlüsselpaares berechnet wird.

9. Verfahren nach Anspruch 8, **gekennzeichnet durch**
- Speichern eines dem Schlüssel zugeordneten Schlüssels des ersten kryptografischen Schlüsselpaares außerhalb des elektronischen Chips (3) in dem Computernetzwerk (9), derart, dass der zugeordnete Schlüssel unter Verwendung von Schlüssel-Netzwerk-Abrufinformation in dem Computernetzwerk (9) abrufbar ist; und
- Speichern von Schlüssel-Abrufdaten, die die Schlüssel-Netzwerk-Abrufinformation anzeigen, auf dem Dokumentenkörper (2) und / oder in dem elektronischen Chip (3).

10. Verfahren nach Anspruch 8 oder 9, **gekennzeichnet durch**
- Speichern eines dem ersten kryptografischen Schlüsselpaar zugeordneten elektronischen Zertifikats außerhalb des elektronischen Chips (3) in dem Computernetzwerk (9), derart, dass das elektronische Zertifikat unter Verwendung von Zertifikat-Netzwerk-Abrufinformation in dem Computernetzwerk (9) abrufbar ist; und
- Speichern von Zertifikat-Abrufdaten, die die Zertifikat-Netzwerk-Abrufinformation anzeigen, auf dem Dokumentenkörper (2) und / oder in dem elektronischen Chip (3).

11. Verfahren nach mindestens einem der vorangehenden Ansprüche, **dadurch gekennzeichnet, dass** bei der Personalisierung weiterhin Folgendes vorgesehen ist:
- Berechnen der ersten digitalen Signatur für die personalisierten Daten unter Verwendung des ersten Signaturverfahrens und eines weiteren Signaturverfahrens, derart, dass die erste digitale Signatur als eine erste zusammengesetzte digitale Signatur für die personalisierten Daten berechnet wird, die in eine erste Datenstruktur und eine zweite Datenstruktur teilbar ist;
- Speichern der ersten Datenstruktur der ersten zusammengesetzten digitalen Signatur außerhalb des elektronischen Chips (3) in dem Computernetzwerk (9), derart, dass die erste Datenstruktur unter Verwendung von erster Netzwerk-Abrufinformation in dem Computernetzwerk (9) abrufbar ist; und
- Speichern der zweiten Datenstruktur der ersten zusammengesetzten digitalen Signatur in dem elektronischen Chip (3).

12. System, mit
- einem personalisierten ID-Dokument, aufweisend
- einen Dokumentenkörper (2);
- einen elektronischen Chip (3), der in den Dokumentenkörper (2) eingebettet ist; und
- personalisierte Daten, die in dem elektronischen Chip (3) gespeichert sind;
**dadurch gekennzeichnet, dass** das personalisierte ID-Dokument weiterhin aufweist:
- erste Abrufdaten, die auf dem Dokumentenkörper (2) und / oder in dem elektronischen Chip (3) gespeichert sind und erste Netzwerk-Abrufinformation anzeigen; und durch
- ein Computernetzwerk (9), in dem eine erste digitale Signatur, die für die personalisierten Daten mit Hilfe eines ersten Signaturverfahrens berechnet wurde, zumindest teilweise gespeichert ist, derart, dass die erste digitale Signatur unter Verwendung der ersten Netzwerk-Abrufinformation zumindest teilweise in dem Computernetzwerk (9) abrufbar ist.

13. Verfahren zum Authentifizieren eines personalisierten ID-Dokuments (1), welches einen Dokumentenkörper (2) und einen hierin eingebetteten elektronischen Chip (3) aufweist, wobei bei dem Verfahren Folgendes vorgesehen ist:
- Auslesen von ersten Abrufdaten, die auf dem Dokumentenkörper (2) und / oder in dem elektronischen Chip (3) gespeichert sind und erste Netzwerk-Abrufinformation anzeigen, die nutzbar ist, um eine erste digitale Signatur zumindest teilweise in einem Computernetzwerk (9) abzurufen, welches außerhalb des elektronischen Chips (3) gebildet ist, wobei die erste digitale Signatur eine digitale Signatur für auf dem elektronischen Chip (3) beim Personalisieren des ID-Dokuments (1) gespeicherte personalisierte Daten ist;
- Abrufen der ersten elektronischen Signatur zumindest teilweise aus dem Computernetzwerk (9) unter Verwendung der ersten Netzwerk-Abrufinformation und
- Prüfen der Integrität der auf dem elektronischen Chip (3) gespeicherten personalisierten Daten unter Verwendung der ersten digitalen Signatur.

14. Verfahren nach Anspruch 13, **dadurch gekennzeichnet, dass** das Prüfen der Integrität der personalisierten Daten weiterhin Folgendes umfasst:
- Berechnen eines jeweiligen Hashwerts für ein erstes Datenobjekt der personalisierten Daten und ein zweites Datenobjekt der personalisierten Daten, welches von dem ersten Datenobjekt verschieden ist; und
- Vergleichen des jeweiligen Hashwerts mit gespeicherten Hashwerten, die jeweils für das erste und das zweite Datenobjekt in dem elektronischen Chip (3) gespeichert sind.

15. Verfahren nach Anspruch 14, **dadurch gekennzeichnet, dass** das Prüfen der Integrität der personalisierten Daten weiterhin Folgendes umfasst:
- Berechnen eines Hashwerts für einen Hashbaum, welcher den jeweiligen Hashwert für das erste und das zweite Datenobjekt in einer Datenbaumstruktur umfasst; und
- Vergleichen des Hashwerts für den Hashbaum mit einem Hashwert, der für den Hashbaum in dem elektronischen Chip (3) gespeichert ist.

## Claims

1. A method for personalizing an ID document (1), in which an ID document (1) is provided with an electronic chip (3) embedded in a document body (2), wherein before and/or after embedding the electronic chip (3) in the document body (2) during a personalization the following is provided:
- storing personalized data in the electronic chip (3); and
- calculating a first digital signature for the personalized data using a first signature method;
**characterized by**
- storing the first digital signature for the personalized data at least partly outside the electronic chip (3) in a computer network (9), such that the first digital signature is at least partly retrievable in the computer network (9) using first network retrieval information; and
- storing first retrieval data indicating the first network retrieval information on the document body (2) and/or in the electronic chip (3).

2. The method according to claim 1, **characterized in that** calculating the first digital signature further comprises:
- calculating a respective hash value for a first data object of the personalized data and a second data object of the personalized data different from the first data object;
- generating a security data object comprising the respective hash value for the first and second data objects; and
- calculating the first digital signature for the security data object using the first signature method.

3. The method according to claim 2, **characterized in that** the security data object is generated with a hash tree data structure comprising the respective hash value for the first data object and the second data object.

4. The method according to claim 2 or 3, **characterized in that** a hash value is calculated for the first retrieval data and the security data object is generated comprising the hash value for the first retrieval data.

5. The method according to at least one of the preceding claims, **characterized in that** a first ordering feature is assigned to the first digital signature for distinguishing from other digital signatures in the computer network (9), and first ordering feature data indicating the first ordering feature are stored on the document body (2) and/or in the electronic chip (3).

6. The method according to at least one of the preceding claims, **characterized in that** the first retrieval data and/or the first ordering feature data are stored at least partly in a machine-readable area of the ID document (1).

7. The method according to at least one of the preceding claims, **characterized by**
- calculating a second digital signature for the personalized data using a second signature method different from the first signature method;
- storing the second digital signature for the personalized data outside the electronic chip (3) in the computer network (9), such that the second digital signature is retrievable in the computer network (9) using second network retrieval information; and
- storing second retrieval data indicating the second network retrieval information on the document body (2) and/or in the electronic chip (3).

8. The method according to at least one of the preceding claims, **characterized in that** the first digital signature for the personalized data is calculated using a key of a first cryptographic key pair.

9. The method according to claim 8, **characterized by**
- storing a key of the first cryptographic key pair assigned to the key outside the electronic chip (3) in the computer network (9), such that the assigned key is retrievable in the computer network (9) using key network retrieval information; and
- storing key retrieval data indicating the key network retrieval information on the document body (2) and/or in the electronic chip (3).

10. The method according to claim 8 or 9, **characterized by**
- storing an electronic certificate assigned to the first cryptographic key pair outside the electronic chip (3) in the computer network (9), such that the electronic certificate is retrievable in the computer network (9) using certificate network retrieval information; and
- storing certificate retrieval data indicating the certificate network retrieval information on the document body (2) and/or in the electronic chip (3).

11. The method according to at least one of the preceding claims, **characterized in that** during the personalization the following is further provided:
- calculating the first digital signature for the personalized data using the first signature method and a further signature method, such that the first digital signature is calculated as a first composite digital signature for the personalized data, which is divisible into a first data structure and a second data structure;
- storing the first data structure of the first composite digital signature outside the electronic chip (3) in the computer network (9), such that the first data structure is retrievable in the computer network (9) using first network retrieval information; and
- storing the second data structure of the first composite digital signature in the electronic chip (3).

12. A system, comprising
- a personalized ID document, comprising
- a document body (2);
- an electronic chip (3) embedded in the document body (2); and
- personalized data stored in the electronic chip (3);
**characterized in that** the personalized ID document further comprises:
- first retrieval data stored on the document body (2) and/or in the electronic chip (3) and indicating first network retrieval information;
and by a computer network (9) in which a first digital signature calculated for the personalized data using a first signature method is at least partly stored, such that the first digital signature is at least partly retrievable in the computer network (9) using the first network retrieval information.

13. A method for authenticating a personalized ID document (1) comprising a document body (2) and an electronic chip (3) embedded therein, wherein in the method the following is provided:
- reading out first retrieval data stored on the document body (2) and/or in the electronic chip (3) and indicating first network retrieval information usable to retrieve a first digital signature at least partly in a computer network (9) formed outside the electronic chip (3), wherein the first digital signature is a digital signature for personalized data stored on the electronic chip (3) during personalization of the ID document (1);
- retrieving the first electronic signature at least partly from the computer network (9) using the first network retrieval information; and
- checking the integrity of the personalized data stored on the electronic chip (3) using the first digital signature.

14. The method according to claim 13, **characterized in that** checking the integrity of the personalized data further comprises:
- calculating a respective hash value for a first data object of the personalized data and a second data object of the personalized data different from the first data object; and
- comparing the respective hash value with stored hash values respectively stored for the first and second data objects in the electronic chip (3).

15. The method according to claim 14, **characterized in that** checking the integrity of the personalized data further comprises:
- calculating a hash value for a hash tree comprising the respective hash value for the first and second data objects in a data tree structure; and
- comparing the hash value for the hash tree with a hash value stored for the hash tree in the electronic chip (3).

## Revendications

1. Procédé de personnalisation d'une pièce d'identité (1), comprenant la fourniture d'une pièce d'identité (1) avec une puce électronique (3) intégrée dans un corps de document (2), dans lequel les étapes suivantes sont réalisées avant et/ou après l'intégration de la puce électronique (3) dans le corps de document (2) pendant une personnalisation :
- le stockage de données personnalisées dans la puce électronique (3) ; et
- le calcul d'une première signature numérique pour les données personnalisées en utilisant une première méthode de signature ;
**caractérisé par** :
- le stockage de la première signature numérique pour les données personnalisées au moins partiellement hors de la puce électronique (3) dans un réseau informatique (9), de sorte que la première signature numérique soit au moins partiellement récupérable dans le réseau informatique (9) en utilisant des premières informations de récupération réseau ; et
- le stockage des premières données de récupération indiquant les premières informations de récupération réseau sur le corps de document (2) et/ou dans la puce électronique (3).

2. Procédé selon la revendication 1, **caractérisé en ce que** le calcul de la première signature numérique comprend en outre :
- le calcul d'une valeur de hachage respective pour un premier objet de données personnalisé et un deuxième objet de données personnalisé, différent du premier objet de données ;
- la génération d'un objet de données de sécurité, qui comprend la valeur de hachage respective du premier et du deuxième objet de données ; et
- le calcul de la première signature numérique de l'objet de données de sécurité au moyen de la première méthode de signature.

3. Procédé selon la revendication 2, **caractérisé en ce que** l'objet de données de sécurité est généré avec une structure de données arborescente de hachage, qui inclut la valeur de hachage respective du premier et du deuxième objet de données.

4. Procédé selon la revendication 2 ou 3, **caractérisé en ce qu'**une valeur de hachage est calculée pour les premières données de récupération et l'objet de données de sécurité est généré avec la valeur de hachage des premières données de récupération.

5. Procédé selon au moins une des revendications précédentes, **caractérisé en ce qu'**une première caractéristique de classification est attribuée à la première signature numérique afin de la distinguer des autres signatures numériques dans le réseau informatique (9) et les données de la première caractéristique de classification, qui indiquent la première caractéristique de classification sont stockées sur le corps de document (2) et/ou dans la puce électronique (3).

6. Procédé selon au moins une des revendications précédentes, **caractérisé en ce que** les premières données de récupération et/ou les données de la première caractéristique de classification sont stockées au moins partiellement dans une zone lisible par machine de la pièce d'identité (1).

7. Procédé selon au moins une des revendications précédentes, **caractérisé par**
- le calcul d'une deuxième signature numérique pour les données personnalisées en utilisant une deuxième méthode de signature, qui est différente de la première méthode de signature ;
- le stockage de la deuxième signature numérique pour les données personnalisées hors de la puce électronique (3) du réseau informatique (9) de sorte que la deuxième signature numérique soit récupérable en utilisant des deuxièmes informations de récupération du réseau dans le réseau informatique (9) ; et
- le stockage de deuxièmes données de récupération, qui indiquent les deuxièmes informations de récupération du réseau sur le corps de document (2) et/ou dans la puce électronique (3).

8. Procédé selon au moins une des revendications précédentes, **caractérisé en ce que** la première signature numérique des données personnalisées est calculée à l'aide d'une clé d'une première paire de clés cryptographiques.

9. Procédé selon la revendication 8, **caractérisé par**
- le stockage d'une clé de la première paire de clés cryptographiques attribuée à la clé hors de la puce électronique (3) dans le réseau informatique (9), de sorte que la clé attribuée puisse être récupérée en utilisant des informations de récupération de réseau de clé dans le réseau informatique (9) ; et
- le stockage de données de récupération de clé, qui indiquent les informations de récupération de réseau de clé sur le corps de document (2) et/ou dans la puce électronique (3).

10. Procédé selon la revendication 8 ou 9, **caractérisé par**
- le stockage d'un certificat électronique associé à la première paire de clés cryptographiques hors de la puce électronique (3) dans le réseau informatique (9), de sorte que le certificat électronique puisse être récupéré à l'aide des informations de récupération de réseau de certificat dans le réseau informatique (9) ; et
- le stockage des données de récupération de certificat, qui indiquent les informations de récupération de réseau de certificat sur le corps de document (2) et/ou dans la puce électronique (3).

11. Procédé selon au moins une des revendications précédentes, **caractérisé en ce que**, lors de la personnalisation, les opérations suivantes sont également prévues :
- le calcul de la première signature numérique des données personnalisées en utilisant la première méthode de signature et une autre méthode de signature, de sorte que la première signature numérique soit calculée comme une première signature numérique composite pour les données personnalisées, qui est divisible en une première structure de données et une deuxième structure de données ;
- le stockage de la première structure de données de la première signature numérique composite hors de la puce électronique (3) dans le réseau informatique (9), de sorte que la première structure de données soit récupérable dans le réseau informatique (9) en utilisant des premières informations de récupération du réseau ; et
- le stockage de la deuxième structure de données de la première signature numérique composite dans la puce électronique (3).

12. Système, comprenant
- une pièce d'identité personnalisée, comprenant
- un corps de document (2) ;
- une puce électronique (3) intégrée au corps de document (2) ; et
- des données personnalisées stockées dans la puce électronique (3) **caractérisé en ce que** le document d'identité personnalisé comprend en outre :
- des premières données de récupération stockées sur le corps de document (2) et/ou dans la puce électronique (3) et indiquant les premières informations de récupération du réseau ;
et par un réseau informatique (9), dans lequel une première signature numérique, calculée pour les données personnalisées à l'aide d'une première méthode de signature, est au moins partiellement stockée, de sorte que la première signature numérique soit au moins partiellement récupérable sur le réseau informatique (9) en utilisant des premières informations de récupération de réseau.

13. Procédé d'authentification d'un document d'identité personnalisé (1) comprenant un corps de document (2) et une puce électronique (3) intégrée à celui-ci, dans lequel le procédé comprend les étapes suivantes :
- la lecture des premières données de récupération stockées sur le corps de document (2) et/ou dans la puce électronique (3) et indiquant les premières informations de récupération de réseau, qui peuvent être utilisées pour récupérer une première signature numérique Signature au moins partiellement dans un réseau informatique (9), qui est formé à l'extérieur de la puce électronique (3), dans lequel la première signature numérique est une signature numérique pour les données personnalisées stockées sur la puce électronique (3) lors de la personnalisation du document (1) ;
- la récupération de la première signature électronique au moins partiellement depuis le réseau informatique (9) en utilisant des premières informations de récupération de réseau ; et
- la vérification de l'intégrité des données personnalisées stockées sur la puce électronique (3) en utilisant la première signature numérique.

14. Procédé selon la revendication 13, **caractérisé en ce que** la vérification de l'intégrité des données personnalisées comprend en outre :
- le calcul d'une valeur de hachage respective pour un premier objet des données personnalisées et un deuxième objet des données personnalisées, qui est différent du premier objet de données ; et
- la comparaison de la valeur de hachage respective avec les valeurs de hachage stockées respectivement pour les premier et deuxième objets de données dans la puce électronique (3).

15. Procédé selon la revendication 14, **caractérisé en ce que** la vérification de l'intégrité des données personnalisées comprend en outre :
- le calcul d'une valeur de hachage pour une arborescence de hachage, qui inclut la valeur de hachage respective pour le premier et le deuxième objet de données dans une structure arborescente de données ; et
- la comparaison de la valeur de hachage de l'arborescence de hachage avec une valeur de hachage, qui est stockée pour l'arborescence de hachage dans la puce électronique (3).
